# EUROPÄISCHE PATENTSCHRIFT

(11) **EP 0 966 845 B1**
(45) Veröffentlichungstag und Bekanntmachung des Hinweises auf die Patenterteilung: **05.06.2002**
(21) Anmeldenummer: 98923991.8
(22) Anmeldetag: 11.03.1998
(51) Int. Cl.: H04Q 1/14

(54) **EINRICHTUNG ZUM FESTLEGEN VON KABELENDEN AN EINEM VERTEILER FÜR EINE TELEKOMMUNIKATIONSANLAGE**
DEVICE FOR FIXING CABLE TERMINALS TO A DISTRIBUTOR IN A TELECOMMUNICATIONS INSTALLATION
DISPOSITIF POUR LA FIXATION D'EXTREMITES DE CABLES SUR UN TABLEAU DE DISTRIBUTION D'UNE INSTALLATION DE TELECOMMUNICATION

(30) Priorität: 12.03.1997 DE 19710201
(43) Veröffentlichungstag der Anmeldung: 29.12.1999
(73) Patentinhaber: CCS Technology, Inc., Wilmington, DE 19803 (US)
(72) Erfinder: NATH, Torsten, D-10367 Berlin (DE)
(74) Vertreter: Sturm, Christoph, Dipl.-Ing.
(86) Internationale Anmeldenummer: DE9800720
(87) Internationale Veröffentlichungsnummer: WO9841036

(56) Entgegenhaltungen:
- DE-B- 2 713 701
- DE-U- 8 122 551
- US-A- 4 794 490
- US-A- 5 575 665

## Beschreibung

Die Erfindung bezieht sich auf eine Einrichtung zum Festlegen zumindest eines Kabelendes an einem Verteiler für eine Telekommunikationsanlage, wobei der Verteiler zumindest einen Kontaktblock mit aneinander gestapelten Kontaktbauteilen zum Anschließen und Verbinden von ankommenden und abgehenden Leitungen aufweist.

Eine derartige Einrichtung ist z.B. durch die DE 27 13 701 C1 bekannt geworden. Danach ist der Kontaktblock auf seiner Rückseite, also im Bereich der Kabelzuführung mit einem Sortierkörper versehen, der zu beiden Seiten des Kontaktbauteiles vorstehende Sortierschienen aufweist, die mit Ausnehmungen zum Halten der ankommenden Kabel bzw. der abgehenden Rangierleiter versehen sind. Um die durchgeführten Leitungen nicht zu beschädigen und kurz zu schließen sind die Sortierschienen üblicherweise mit isolierenden Oberflächen versehen oder aus Kunststoff hergestellt.

In der modernen Telekommunikationstechnik werden zunehmend Leitungen mit höheren Kontaktfrequenzen verwendet, die mit einem Schirmmantel versehen sind.

Der Erfindung liegt die Aufgabe zugrunde, derartige Leitungen in einfacher Weise in unmittelbarer Nähe der Kontaktbauteile festzulegen und ihren Schirmmantel mit Erde zu verbinden. Diese Aufgabe wird durch die Erfindung gemäß Anspruch 1 gelöst.

Durch die Verwendung der kammartigen Fixierteile ist es möglich, die ankommenden Kabel in einfacher Weise am Kontaktblock festzulegen und den Kabelschirm mit Erde zu verbinden. Das kammartige Fixierteil kann ähnlich wie die Sortierschiene am Kontaktblock befestigt werden. Dadurch ist es möglich, die Kontaktblöcke ohne große konstruktive Änderung mit den geeigneten kammartigen Fixierteilen zu versehen. Durch die Verwendung der Kontaktmuffen wird eine gute Kontaktierung zum Schirmmantel des Kabels ermöglicht. Die Kontaktmuffen können in geeigneter Weise mit dem Fixierteil z.B. verklemmt werden und damit an Erde gelegt werden.

Vorteilhafte Weiterbildungen der Erfindung sind in den Ansprüchen 2 bis 4 gekennzeichnet.

Durch die Schraubmuffen nach Anspruch 2 können die Kontaktmuffen in einfacher Weise mit dem Fixierteil verschraubt und sicher kontaktiert werden.

Durch die Weiterbildung nach Anspruch 3 ist es möglich, Rangierkämme bzw. Fixierteile unterschiedlicher Art nach Bedarf zu kombinieren, ohne daß dazu besondere konstruktive Änderungen erforderlich sind. Es ist auch möglich, auf einer Seite Fixierteile und Rangierkämme nach Bedarf zu kombinieren.

Durch die Weiterbildung nach Anspruch 4 ist es möglich, die Betriebserde von der Gestellerde zu trennen, um so eine genauere definierte Erdbeziehung herzustellen.

Im Folgenden wird die Erfindung anhand eines in der Zeichnung dargestellten Ausführungsbeispieles näher erläutert.
- Figur 1: zeigt in einer Frontansicht einen Verteilerblock mit übereinandergestapelten Kontaktbauteilen,
- Figur 2: eine Draufsicht auf den Verteilerblock nach Anspruch 1.

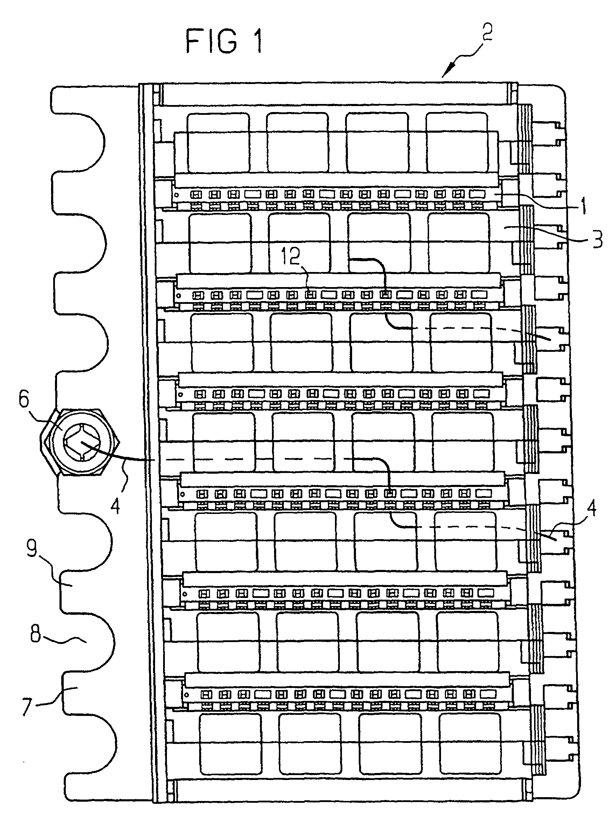

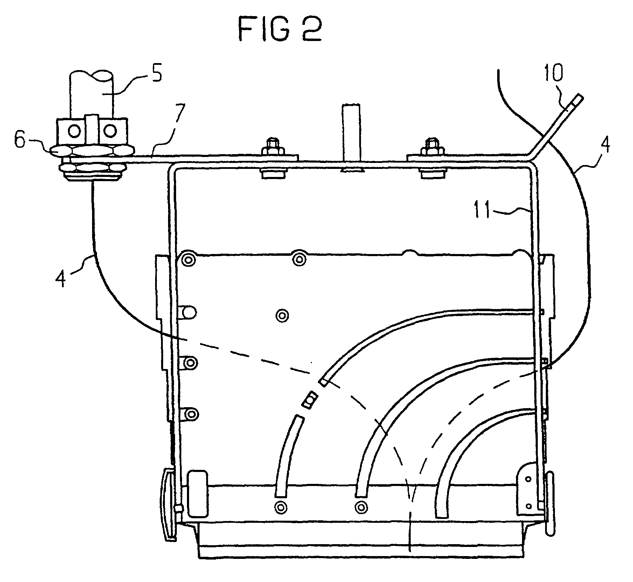

Nach den Figuren 1 und 2 sind scheibenförmige Kontaktbauteile 1 in einem Kontaktblock 2 eines nicht näher dargestellten Verteilers einer Telekommunikationsanlage übereinandergestapelt angeordnet, wobei jeweils zwischen zwei Kontaktbauteilen Drahtführungselemente 3 angeordnet sind, durch die ankommende und abgehende Leitungen 4 von der Rückseite durch das Innere des Kontaktblockes zur Frontseite geführt sind. Die Kontaktbauteile 1 weisen in diesem Bereich als Schneidklemmen ausgebildete Anschlußelemente 12 auf, an denen die Enden der Leitungen 4 angeschlossen sind.

Auf der linken Bildseite sind die ankommenden Leitungen 4 in Kabeln 5 zusammengefaßt. Die auf der rechten Bildseite abgehenden Leitungen 4 sind z.B. als einzelne Rangierleitungen ausgebildet. Die Enden der geschirmten Kabel 5 sind mittels einer Schraubmuffe 6 an einem kammartigen Fixierteil 7 angeschraubt. Die metallischen Schraubmuffen 6 sind so ausgebildet, daß sie mit dem Kabelschirm kontaktiert werden können. Das Fixierteil 7 besteht aus einem blanken geerdeten Metallblech mit dem die Schraubmuffe 6 kontaktiert ist. Es ist mit ausgerundeten Vertiefungen 8 versehen, in die die Schraubmuffen 6 eingesetzt sind. Zwischen den Vertiefungen 8 sind stegartige Wangen 9 angeordnet, an denen die Schraubmuffen 6 gehalten sind.

Auf der dem Fixierteil 7 gegenüberliegenden Seite des Kontaktblocks 2 ist eine als Rangierkamm ausgebildete Sortierschiene 10 angeordnet, in der die abgehenden Leitungen 4 geführt sind.

Die Sortierschiene 10 und das längliche Fixierteil 7 sind separat an einem Träger 11 für die Kontaktbauteile 1 angeschraubt. Dadurch ist es möglich, Sortierschienen 10 und Fixierteile 7 nach Bedarf in unterschiedlicher Konfiguration am Kontaktblock 2 zu kombinieren.

## Patentansprüche

1. Einrichtung zum Festlegen zumindest eines Kabelendes an einem Verteiler für eine Telekommunikationsanlage,
wobei der Verteiler mindestens einen Kontaktblock (2) mit aneinander gestapelten Kontaktbauteilen (1) zum Anschließen und Verbinden von ankommenden und abgehenden elektrischen Leitungen (4) aufweist, wobei die Kontaktbauteile (1) mit frontseitigen Anschlußelementen (12) für die Leitungen (4) versehen sind und
wobei im Bereich einer Kabelzuführung zum Kontaktblock (2) zumindest ein kammartiges Fixierteil (7) für die ankommenden Leitungen (4) enthaltende Kabel (5) vorgesehen ist,
**dadurch gekennzeichnet,**
**daß** das geerdete Fixierteil (7) zumindest in einem Kammbereich eine metallische Oberfläche aufweist und
**daß** für die in geschirmten Kabeln (5) zusammengefaßten Leitungen (4) Kontaktmuffen (z.B. 6) vorgesehen sind, die in schlitzartige Vertiefungen (8) des Fixierteiles (7) einsetzbar sind und die an zwischen den Vertiefungen (8) angeordneten Wangen (9) des Fixierteiles (7) befestigbar sind.

2. Einrichtung nach Anspruch 1,
**dadurch gekennzeichnet,**
**daß** die Kontaktmuffen als Schraubmuffen (6) ausgebildet sind, die unmittelbar mit dem Fixierteil (7) verschraubbar sind.

3. Einrichtung nach Anspruch 1 oder 2,
**dadurch gekennzeichnet,**
**daß** für die abgehenden Leitungen (4) ein separater Rangierkamm (z.B. 10) vorgesehen ist, der an einem Träger (11) für die Kontaktbauteile (1) befestigt ist und
**daß** das Fixierteil (7) und der Rangierkamm (10) aus separaten Teilen besteht, die montagetechnisch einfach mit dem Träger (11) verbunden sind.

4. Einrichtung nach Anspruch 1, 2 oder 3,
**dadurch gekennzeichnet,**
**daß** das Fixierteil (7) gegen den Träger (11) elektrisch isoliert ist.

## Claims

1. Device for fixing at least one cable end to a distributor for a telecommunications system, the distributor having at least one contact block (2) with contact components (1) stacked on one another for connecting and linking incoming and outgoing electric lines (4), the contact components (1) being provided with connection elements (12) on their front side for the lines (4), and at least one comb-like fixing part (7) for cables (5) containing the incoming lines (4) being provided in the region of a cable supply line to the contact block (2), **characterized in that** the earthed fixing part (7) has a metallic surface at least in one comb region, and **in that** contact sleeves (for example 6) are provided for the lines (4), which are combined in shielded cables (5), it being possible for said contact sleeves to be inserted into slot-like depressions (8) in the fixing part (7) and to be fastened to cheeks (9) of the fixing part (7) which are arranged between the depressions (8).

2. Device according to Claim 1, **characterized in that** the contact sleeves are designed as screw sleeves (6) which can be screwed directly to the fixing part (7).

3. Device according to Claim 1 or 2, **characterized in that** a separate jumper comb (for example 10) is provided for the outgoing lines (4), said jumper comb being attached to a support (11) for the contact components (1), and **in that** the fixing part (7) and the jumper comb (10) comprise separate parts which are connected to the support (11) in an easily assembled manner.

4. Device according to Claim 1, 2 or 3, **characterized in that** the fixing part (7) is electrically insulated from the support (11).

## Revendications

1. Dispositif de fixation d'au moins une extrémité de câble sur un répartiteur d'une installation de télécommunication, le répartiteur présentant au moins un bloc de contacts (2) comportant des éléments de contact (1) superposés, destinés au raccordement et à la connexion de lignes électriques d'entrée et de sortie (4), les éléments de contact (1) étant pourvus d'éléments frontaux de raccordement (12) des lignes (4) et au moins un élément de fixation (7) en forme de peigne destiné aux câbles (5) renfermant les lignes d'entrée (4) étant prévu dans la zone d'arrivée des câbles au bloc de contacts (2), **caractérisé en ce que** l'élément de fixation (7) mis à la terre présente une surface métallique au moins dans une zone en forme de peigne et **en ce que** des manchons de contact (par exemple 6) sont prévus pour les lignes (4) réunies dans des câbles protégés (5), lesquels manchons peuvent être insérés dans des évidements (8) en forme de fente de l'élément de fixation (7) et fixés sur des flasques (9) de l'élément de fixation (7) disposées entre les évidements (8).

2. Dispositif selon la revendication 1, **caractérisé en ce que** les manchons de contact sont conformés comme des manchons filetés (6), lesquels peuvent être vissés directement sur l'élément de fixation (7).

3. Dispositif selon la revendication 1 ou 2, **caractérisé en ce qu'**un peigne de rangement séparé (par exemple 10) est prévu pour les lignes de sortie (4) et est fixé sur un support (11) destiné aux éléments de contact (1) et **en ce que** l'élément de fixation (7) et le peigne de rangement (10) sont constitués de pièces séparées, reliées au support (11) selon une technique de montage simple.

4. Dispositif selon la revendication 1, 2 ou 3, **caractérisé en ce que** l'élément de fixation (7) est isolé électriquement du support (11).
